# NEUE EUROPÄISCHE PATENTSCHRIFT

(11) **EP 2 436 507 B2**
(45) Veröffentlichungstag und Bekanntmachung des Hinweises auf die Entscheidung über den Einspruch: **24.12.2025**
(45) Hinweis auf die Patenterteilung: 20.10.2021
(21) Anmeldenummer: 11183023.8
(22) Anmeldetag: 28.09.2011
(51) Int. Cl.: B29C 49/78, B29C 49/64, B29C 49/12, B29C 49/36, B29C 35/08, B29C 49/48, B29C 49/42

(54) **Vorrichtung und Verfahren zum Umformen von Kunstsoffvorformlingen zu Kunststoffbehältnissen mit variabler Ausstoßleistung**
Device and method for reforming plastic preforms into plastic containers with variable output performance
Dispositif et procédé de déformation d'ébauches en plastique en conteneurs en plastique dotés d'une capacité d'expulsion variable

(30) Priorität: 01.10.2010 DE 102010047104
(43) Veröffentlichungstag der Anmeldung: 04.04.2012
(73) Patentinhaber: Krones AG, 93073 Neutraubling (DE)
(72) Erfinder: Senn, Konrad, 93073 Neutraubling (DE); Englbrecht, Rainer, 93073 Neutraubling (DE); Humele, Heinz, 93073 Neutraubling (DE)
(74) Vertreter: Bittner, Bernhard

(56) Entgegenhaltungen:
- EP-A2- 2 098 356
- WO-A2-2008/098565
- DE-A1- 19 843 053

## Beschreibung

Die Erfindung bezieht sich auf die Vorrichtung zum Umformen von Kunststoffvorformlingen zu Kunststoffbehältnissen. Derartige Maschinen, beispielsweise Blasmaschinen, sind aus dem Stand der Technik seit langem bekannt. Dabei werden den Blasmaschinen erwärmte Kunststoffvorformlinge zugeführt und diese, insbesondere durch Beaufschlagung mit Druckluft, zu Kunststoffbehältnissen umgeformt.

Im Stand der Technik werden derartige Blasmaschinen bzw. Streckblasmaschinen stets mit konstanter Ausbringleistung betrieben. Dies liegt daran, dass durch den aktuellen Aufbau die Heizzeit und die Ausbringleistung unmittelbar zusammenhängen. Die konstante Ausbringleistung bringt jedoch viele Nachteile mit sich, insbesondere wenn die Maschine in einem sogenannten Block mit nachfolgenden Maschinen, wie beispielsweise der Etikettiermaschine und / oder dem Füller verbaut ist.

Hier sind die einzelnen Behandlungsstationen über Transfersterne fest miteinander verknüpft und somit auch die Ausbringleistungen. Oft wäre es aber von Vorteil, wenn man diesen Block der Maschinen bei Bedarf drosseln oder hochfahren könnte, beispielsweise wenn in einem der nachfolgenden Aggregate Störungen auftreten. Dies ist jedoch heute insbesondere dann nicht möglich, wenn die Blasmaschine als Leitmaschine eingesetzt wird.

Die WO 2010 /015220A1 beschreibt ein Verfahren und eine Vorrichtung zur Blasformung von Behältern. Dabei weist die Blasmaschine eine Reckeinrichtung auf, die derart gesteuert ist, dass eine Reckgeschwindigkeit unmittelbar im Anschluss an einen Start des Betriebs der Vorrichtung unterschiedlich zu einer Reckgeschwindigkeit in einer Produktionsphase mit einem zeitlichen Abstand zur Aufnahme des Betriebs vorgegeben ist.

Durch diese Vorgehensweise soll erreicht werden, dass, mit geringer zeitlicher Verzögerung zu einer Produktionsaufnahme, qualitativ hochwertige Behälter hergestellt werden können.

Die DE 10 2007 008 023 A1 beschreibt ein Verfahren und eine Vorrichtung zur Blasformung von Behältern. Dabei erfolgt eine Vorgabe der Positionierung einer Reckstange unter Verwendung eines elektromechanischen Reckstangenantriebs und eine Drehbewegung einer Motorwelle eines Servomotors wird hierbei durch eine mechanische Kopplungseinrichtung in eine Hubbewegung der Reckstange transformiert.

Die WO2009/144664A2 beschreibt eine Anlage zum Blasen von Kunststoffbehältnissen. Dabei weist jede Blasstation einen Antriebsmotor, der mit Reckstangen gekoppelt ist, auf.

Die DE 101 53 045 A1 beschreibt ein Verfahren und eine Vorrichtung zum Steuern eines Blasvorgangs. Dabei wird zur Koordinierung der Steuerung zeitweilig eine aktuelle Rotationspositionierung des Blasrades messtechnisch erfasst und die entsprechenden Messinformationen werden von einer Auswertungseinheit mit Schaltpositionsvorgaben für die Zufuhr und Ableitung des Blasfluids verglichen.

Der vorliegenden Erfindung liegt daher die Aufgabe zu Grunde, den Arbeitsbetrieb insbesondere geblockter Anlagen welche eine Blasmaschine aufweisen, zu vereinfachen, insbesondere eine höhere Variabilität hinsichtlich der Ausbringleistung zu erreichen. Dies wird erfindungsgemäß durch eine Vorrichtung nach Anspruch 1 und ein Verfahren nach Anspruch 11 erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist eine Vielzahl von Blasstationen auf, wobei diese Blasstationen jeweils Blasformen aufweisen, innerhalb denen Kunststoffvorformlinge zu den Kunststoffbehältnissen umformbar sind. Weiterhin weist die Vorrichtung Beaufschlagungseinrichtungen auf, um die Kunststoffvorformlinge mit einem fließfähigen und insbesondere gasförmigen Medium zu deren Umformung zu beaufschlagen sowie Reckstangen, um die Kunststoffvorformlinge entlang der Längsrichtung zu dehnen.

Daneben weist die Vorrichtung eine Transporteinrichtung auf, welche die Blasstationen mit den Kunststoffvorformlingen entlang eines vorgegebenen Transportpfades transportiert sowie eine Steuerungseinrichtung, welche die Bewegung der Reckstangen und die Beaufschlagung der Kunststoffvorformlinge mit dem fließfähigen Medium derart steuert, dass vorgegebene Teilschritte des Umformungsvorgangs während des Transports der Kunststoffvorformlinge entlang des Transportpfades durchgeführt werden.

Erfindungsgemäß sind Teilschritte des Umformungsvorgangs unabhängig von dem geometrischen Ort der Kunststoffvorformlinge entlang eines Transportpfades durchführbar und hierdurch ist eine Ausstoßleistung der Vorrichtung veränderbar. Unter der Ausstoßleistung wird dabei die Anzahl an hergestellten Behältnissen pro Zeiteinheit verstanden.

Im Stand der Technik werden die Umformungsvorgänge üblicherweise ortsabhängig durchgeführt, was beispielsweise durch Führungskurven für die Reckstangen bewerkstelligt wird. Mit anderen Worten existiert im Stand der Technik eine Zuordnung zwischen dem Ort des Kunststoffvorformlings auf seinem Transportpfad und dem jeweiligen Verfahrensschritt.

Die EP 2098356 A2 zeigt eine Vorrichtung zum Erzeugen von Kunststoffbehältnissen mit einer Transporteinrichtung, an der eine Vielzahl von Blasstationen zum Expandieren von Vorformlingen zu Kunststoffbehältnissen angeordnet ist, wobei jede dieser Blasstationen einen Aufnahmeraum für einen zu expandierenden Vorformling, wenigstens eine Zuführleitung zum Zuführen eines gasförmigen Mediums an den Vorformling, wenigstens ein Ventil welcher die Zuführung des gasförmigen Mediums an den Vorformling steuert und ein mechanisch betätigbares Reckelement zum Recken der Vorformlinge aufweist, wobei jede Station eine Antriebseinrichtung zum Bewegen des Reckelements aufweist. Erfindungsgemäß weist jede Blasstation eine Steuerungseinrichtung auf, welche sowohl das Ventil als auch die Antriebseinrichtung zur Erzeugung des Kunststoffbehältnisses steuert.

Die DE 19843053 A1 zeigt ein Verfahren zur ungleichen Temperaturverteilungen in aufeinanderfolgenden Vorformlingen auszugleichen, werden jedem beim Einblasen in Behälter unterschiedliche Betriebsparameter auferlegt. Nach der Fertigstellung weisen die Gefäße eine nahezu identische räumliche Verteilung des Materials auf: Dicke, Orientierung und Kristallisationseigenschaften. Ein unabhängiger Anspruch wird für die entsprechende Ausrüstung einschließlich einer Temperiereinheit, einer Dehneinheit (oder Vorblaseinheit) und einer Blasstation erhoben. Es ist eine Parametersteuerung vorgesehen, mit Variation wie beschrieben. Bevorzugte Merkmale: Es folgen zwei Blasformphasen: Vorblasen und Hauptblasen. In der letzteren ist der Druck höher als in der ersteren. Die Blasparameter werden variiert und umfassen einen oder mehrere der folgenden Parameter: Dauer der Vorblasphase, Dauer der Hauptblasphase, zeitlicher Wechsel zwischen Vor- und Hauptblasphase, Dehnungsrate, Intervall ab Beginn der Dehnung. Es wird eine ungleiche thermische Konditionierung von aufeinanderfolgenden Vorformen durchgeführt. Nach Ablauf von jeweils unterschiedlichen Wartezeiten liegt eine annähernd ähnliche Temperaturverteilung in den zu blasenden Vorformlingen vor. Es erfolgt zunächst eine im Wesentlichen gleichmäßige thermische Konditionierung aufeinanderfolgender Vorformlinge, gefolgt von einer Nachtemperierung. Dadurch werden unterschiedliche Wartezeiten bis zum Blasformen in etwa ausgeglichen. Die einstufige Herstellung kann auf diese Weise durchgeführt werden. Zuerst werden alle N Vorformlinge gleichzeitig spritzgegossen, dann werden X x M Vorformlinge gleichzeitig zu Behältern geformt, wobei X x M = N. Die Kontrolle der Veränderung eines oder mehrerer Blasparameter erfolgt in Abhängigkeit von der Messung mindestens einer Vorformlingseigenschaft. Die Parameterkontrolle wird zur Dehnung und/oder zur Kontrolle des gegebenen Temperaturprofils für die Vorformlinge angewendet.

Im Rahmen der Erfindung wird erfindungsgemäß vorgeschlagen, dass zwar eine Zuordnung zwischen dem Ort des Kunststoffvorformlings und dem jeweiligen Verfahrensschritt existiert, diese Zuordnung jedoch wählbar ist, so dass beispielsweise entlang des Transportpfades früher mit dem Blasen des Kunststoffvorformlings oder beispielsweise auch früher mit dem Recken des Kunststoffvorformlings begonnen werden kann.

Die Transporteinrichtung für die Kunststoffvorformlinge weist dabei vorteilhaft ein Blasrad auf, an dem die einzelnen Blasstationen angeordnet sind, auf diese Weise handelt es sich bei dem Transportpfad um einen kreis- oder kreissegmentförmigen Transportpfad. Somit wird erfindungsgemäß vorgeschlagen, dass beispielsweise die Umfangswinkel, bei denen spezielle Verfahrensschritte durchgeführt werden, veränderbar sind. Durch die unterschiedlich wählbaren Schaltpunkte für die Teilschritte kann insgesamt die Transportgeschwindigkeit der Transporteinrichtung, beispielsweise die Drehgeschwindigkeit des Blasrades und somit die Ausstoßleistung verändert werden.

Vorteilhaft weist die Steuerungseinrichtung eine Zeitsteuerung zum Steuern der Bewegung der Reckstangen auf. Im Gegensatz zum Stand der Technik wird daher die Bewegung der Reckstangen und / oder Beaufschlagungseinrichtungen nicht ortsabhängig gesteuert, sondern zeitabhängig, sodass beispielsweise unabhängig von der Transportgeschwindigkeit der Transporteinrichtungen die zeitliche Abfolge für den Blasvorgang beibehalten werden kann.

Auf diese Weise kann gleichwohl sichergestellt werden, dass unabhängig von der Transportgeschwindigkeit die Qualität der so hergestellten Behältnisse gleichbleibt, da der entsprechende Umformungsvorgang und insbesondere die Abstimmung der einzelnen Teilschritte in einer genau festgelegten und insbesondere auch konstanten zeitlichen Abfolge erfolgt.

Bei einer weiteren vorteilhaften Ausgestaltung weist die Steuerungseinrichtung eine Zeitsteuerung zum Steuern der Beaufschlagungseinrichtungen auf.

Die oben erwähnten Teilschritte des Umformungsvorgangs sind dabei vorteilhaft aus einer Gruppe von Teilschritten ausgewählt, welche ein Vorblasen des Kunststoffvorformlings, ein Hauptblasen des Kunststoffvorformlings, ein Recken des Kunststoffvorformlings mit der Hilfe der Reckstange und dergleichen enthält.

Bei einer weiteren vorteilhaften Ausführungsform weist jede Blasstation eine Antriebseinrichtung zum Bewegen der Reckstange auf und diese Antriebseinrichtungen sind unabhängig voneinander steuerbar. Als Antriebseinrichtungen kommen dabei beispielsweise Elektromotoren, insbesondere Linearmotoren, Servomotoren, Hydraulikzylinder oder Pneumatikzylinder in Betracht.

Bei einer weiteren vorteilhaften Ausführungsform weist die Vorrichtung einen drehbaren Träger auf, an dem eine Vielzahl von Blasstationen angeordnet ist. Die Blasstationen werden damit wenigstens abschnittsweise auf einer kreisförmigen Bahn transportiert. Damit handelt es sich bei dieser Ausführungsform bei der Vorrichtung insbesondere um eine sog. Rundläufermaschine.

Bei einer weiteren vorteilhaften Ausführungsform weist die Vorrichtung eine Heizvorrichtung zum Erwärmen der Kunststoffvorformlinge und eine Transporteinrichtung, welche die Kunststoffvorformlinge während der Erwärmung entlang eines zweiten vorgegebenen Transportpfades transportiert, auf. Daneben ist diese Heizvorrichtung in einer Transporteinrichtung der Kunststoffvorformlinge vor der oben beschriebenen Vorrichtung bzw. den einzelnen Blasstationen angeordnet.

Wie eingangs erwähnt, weisen derartige Anlagen neben der eigentlichen (Streck)blasmaschine üblicherweise noch eine Heizeinrichtung auf, welche die Kunststoffvorformlinge erwärmt. Es wäre jedoch grundsätzlich auch möglich, dass die Kunststoffvorformlinge unmittelbar nach ihrer Herstellung von der Streckblasmaschine umgeformt werden.

Weiterhin ist die Erwärmung der Kunststoffvorformlinge unabhängig von dem geometrischen Ort der Kunststoffvorformlinge entlang des zweiten Transportpfades durchführbar. Es wird daher vorgeschlagen, dass auch die Heizvorrichtung derart gestaltet ist, dass der Heizvorgang anpassbar ist, wobei hierbei insbesondere auch eine Ausstoßleistung der Heizvorrichtung veränderbar ist. Ein besonderer Vorteil dieser Ausgestaltung besteht darin, dass eine derartige Heizvorrichtung dann geblockt mit der nachfolgenden Streckblasmaschine betrieben werden kann.

Mit anderen Worten kann hier bevorzugt mit der Heizvorrichtung die Dauer der Temperierung unabhängig von der Ausbringgeschwindigkeit variiert werden, d. h. ebenfalls mit variabler Ausbringleistung gefahren werden. Dabei kann beispielsweise die Heizvorrichtung derart gesteuert werden, dass im wesentlichen unabhängig von der Transportgeschwindigkeit der Kunststoffvorformlinge die in diese eingebrachte Heizleistung, bzw. Heizenergie im wesentlichen konstant gehalten werden kann, bzw. eine Endtemperatur der Kunststoffvorformlinge beim Verlassen der Heizeinrichtung im wesentlichen konstant bleibt. Auch hier ist vorteilhaft der beschriebene Heizprozess zeit- oder temperaturgesteuert und insbesondere nicht ortsgesteuert.

So ist es beispielsweise möglich, dass die Kunststoffvorformlinge unabhängig von der Transportgeschwindigkeit in der Heizeinrichtung so lange erwärmt werden, bis eine bestimmte Solltemperatur erreicht ist. Für diesen Zweck weist vorteilhaft die Heizeinrichtung Sensoreinrichtungen auf, welche insbesondere auch berührungslos eine Temperatur der Kunststoffvorformlinge messen. Vorteilhaft ist die Heizeinrichtung mit der oben erwähnten Vorrichtung synchronisiert.

Vorteilhaft weist die Anlage eine Zeitsteuerung und/oder Temperatursteuerung zum Erwärmen der Kunststoffvorformlinge entlang des zweiten Transportpfades auf.

Wenn nun die Ausbringleistung unterhalb der Maximalleistung liegen soll, wird die Maschinengeschwindigkeit der Heizeinrichtung gedrosselt und der Zeitpunkt und somit auch der Ort, an dem der Heizprozess beginnt, beispielsweise anteilig nach hinten verschoben, sodass zwischen dem Ende des Heizprozesses und dem Beginn des Streckblasprozesses die Zeit unabhängig von der Maschinenleistung annähernd konstant gehalten werden kann. Daneben wäre es auch möglich, die Energiezufuhr zur Erwärmung der Kunststoffvorformlinge zu drosseln.

Wie oben erwähnt ist hierbei vorteilhaft neben dem zeitgesteuerten Heizvorgang auch ein zeitgesteuerter Blasvorgang vorteilhaft, wobei dieser beispielsweise dadurch zu realisieren ist, dass der Kunststoffvorformling nicht mehr mechanisch über eine ortsgebundene Kurve gereckt wird, sondern durch einen zeitgesteuerten elektrischen Antrieb. Es wäre jedoch auch denkbar, weiterhin eine kurvengesteuerte Reckeinrichtung zu verwenden und eine Anpassung an den Schaltpunkten der einzelnen Blasventile, welche den Blasvorgang durchführen, vorzunehmen, um somit auf das Ergebnis des Blasprozesses einzuwirken.

Erfindungsgemäß weist die Anlage weitere, der Blasmaschine nach geschaltete, Aggregate wie beispielsweise Etikettiermaschinen, Fülleinrichtungen und dergleichen auf.

Erfindungsgemäß kann es verfahrenstechnisch in derartigen Anlagen zu Situationen kommen, in denen eine niedrigere Leistung wünschenswert wäre. Beispiele hierfür sind ein Rollenwechsel des Etikettieraggregats, bzw. einer Verpackungsmaschine (z.B. Bestücken mit einer neuen Verpackungsmittelrolle) oder wenn bei Durchführung mit Auto - Splicing - Funktion mit geminderter Ausbringleistung der Maschine gefahren werden muss. Erfindungsgemäß kann hierbei bei Anwendung des Verfahrens insbesondere bei geblockten Aufstellungen die Leistung der Blasmaschine auch während der Produktion angepasst werden.

Im Allgemeinen kann dies genau dann zur Anwendung gebracht werden, wenn Materialversorgungsvorgänge bei geminderter Leistung, aber auch durch Abschaltung der einzelnen zu versorgenden Maschinen den Durchsatz des der Blasmaschine folgenden Systems minimal oder lokal an nach geschalteter Stelle auf Null setzen. Nach dem entsprechenden Materialversorgungsvorgang kann dann die Leistung wieder auf einen Normalwert erhöht werden. Diese Art der Regelung kann entweder automatisiert von statten gehen, oder vom Bediener punktuell durch Justage an der Blasmaschine durchgeführt werden.

Eine Leistungsanpassung kann auch prozesstechnisch oder durch äußere Umwelteinflüsse von Vorteil sein. Kommt es zum Beispiel auf Grund von Veränderungen im Produkt zum Aufschäumen des Produkts während des Füllvorgangs, ist es zweckdienlich, die Leistung der Blasmaschine und des Füllers zu reduzieren, bis der Effekt nicht mehr auftritt. Eine Leistungserhöhung kann danach wieder erfolgen. Hierbei kann bei Anwendungen des Verfahrens, insbesondere bei geblockten Aufstellungen, die Leistung der Blasmaschine auch während der Produktion angepasst werden. Weitere Beispiele sind unterschiedliche Qualitäten der zu verarbeitenden Materialien, wie beispielsweise der Kunststoffvorformlinge, des Produkts, oder der Verpackungsmaterialien wie der Folien.

Im Allgemeinen kann durch das Verfahren bei prozesstechnischen Anforderungen die Leistungsanpassung durchgeführt werden. Diese Art der Regelung kann entweder automatisiert von Statten gehen oder von dem Bediener punktuell durch Justage an der Blasmaschine durchgeführt werden.

Weiterhin können sich aus energetischen Effekten auf Anlagenebene oder aus äußeren Einflussfaktoren wie der Verfügbarkeit von Ressourcen in der Logistik, Notwendigkeiten für eine Anpassung der Ausstoßleistung der Maschinen ergeben.

Allgemein kann das hier beschriebene Verfahren zum Regeln einer Anlage auf Grund von Materialversorgungsvorgängen, prozesstechnischen Anforderungen, zum Erzielen von energetischen Effekten, insbesondere auf Anlagenebene, bzw. auch auf äußere Einflussfaktoren Anwendung finden.

Bei einer weiteren vorteilhaften Ausführungsform weist die Heizvorrichtung eine Vielzahl von Heizeinrichtungen zum individuellen Erwärmen der Kunststoffvorformlinge auf. So können beispielsweise einzelne Heizkavitäten vorgesehen sein, in denen einzelne oder Gruppen von Vorformlingen eingebracht werden. Auf diese Weise wird eine individuelle Erwärmung der Kunststoffvorformlinge ermöglicht und auf diese Weise kann auch schnell auf Anforderungen, insbesondere äußere Anforderungen, reagiert werden. Vorteilhaft können dabei diese Heizeinrichtungen derart gesteuert sein, dass, wie oben erwähnt, die in die Kunststoffvorformlinge eingebrachte Energie auch bei einer Änderung der Transportgeschwindigkeit gleich bleibt.

Bei einer weiteren vorteilhaften Ausführungsform ist die Heizvorrichtung eine mikrowellenbasierte Heizvorrichtung bzw. weist mikrowellenbasierte Heizeinrichtungen auf. Derartige mikrowellenbasierte Heizeinrichtungen sind aus dem Stand der Technik, beispielsweise der DE 10 2007 022 386 A1 bekannt. Der Offenbarungsgehalt dieser Druckschrift wird hiermit vollumfänglich auch zum Offenbarungsgehalt der vorliegenden Anmeldung gemacht. Für die vorliegende Erfindung rechnen sich mikrowellenbasierte Heizeinrichtungen in besonderer Weise, da über die Mikrowellentechnik schnell und unkompliziert die individuelle Erwärmung der Kunststoffvorformlinge geregelt werden kann. Alternativ sind aber auch andere individuelle Heizeinrichtungen, wie z.B. eine Laser- oder eine STIR-Heizung, denkbar.

Bei einer weiteren vorteilhaften Ausführungsform ist wenigstens eine Heizeinrichtung, und sind bevorzugt mehrere und besonders bevorzugt alle Heizeinrichtungen bewegbar. Insbesondere sind die Heizeinrichtungen, auch beispielsweise, wenn sie als Kavitäten ausgeführt sind, gemeinsam mit den Vorformlingen bewegbar.

Erfindungsgemäß weist die Anlage zusätzliche Aggregate auf, wobei diese zusätzlichen Aggregate der Umformungseinrichtung nachgeschaltet sind. Diese nachgeschalteten Aggregate sind dabei aus einer Gruppe von Aggregaten ausgewählt, welche Etikettiermaschinen, Füller, Rinser, Sterilisationseinrichtungen und dergleichen enthält.

Bei einer weiteren vorteilhaften Ausführungsform ist die Heizvorrichtung aus einer Gruppe von Heizvorrichtungen ausgewählt, welche mikrowellenbasierte Heizvorrichtungen, laserbasierte Heizvorrichtungen, Infrarot-Heizvorrichtungen, STIR (selektive transformierte Infrarot) - Heizvorrichtungen, Kombinationen hieraus und dergleichen enthält. Vorteilhaft handelt es sich bei der Heizvorrichtung um eine mikrowellenbasierte Heizeinrichtung.

Die vorliegende Erfindung ist weiterhin auf ein Verfahren gemäß Anspruch 11 zum Umformen von Kunststoffvorformlingen zu Kunststoffbehältnissen gerichtet. Dabei werden die Kunststoffvorformlinge in einer Vielzahl von Blasstationen zu den Kunststoffbehältnissen umgeformt, wobei die Kunststoffvorformlinge während dieses Umformungsprozesses mittels Beaufschlagungseinrichtungen mit einem fließfähigen Medium zu deren Umformung beaufschlagt werden und mittels Reckstangen entlang der Längsrichtung gedehnt werden und wobei die Blasstationen mit den Kunststoffvorformlingen entlang eines vorgegebenen ersten Transportpfades transportiert werden. Die Bewegungen der Reckstangen und die Beaufschlagung der Kunststoffvorformlinge mit dem fließfähigen Medium wird dabei derart gesteuert, dass vorgegebene Teilschritte des Umformungsvorgangs während des Transports der Kunststoffvorformlinge entlang dieses Transportpfades durchgeführt werden.

Dabei werden die Teilschritte des Umformungsvorgangs wenigstens teilweise unabhängig von dem geometrischen Ort der Kunststoffvorformlinge entlang des Transportpfades durchgeführt, um durch diese Unabhängigkeit die Ausstoßleistung der geformten Kunststoffbehältnisse zu verändern bzw. verändern zu können.

Es wird daher auch verfahrensseitig vorgeschlagen, dass der Steuerungsvorgang nicht ortsabhängig vorgenommen wird, sondern beispielsweise zeitabhängig oder temperaturabhängig. Auf diese Weise kann, wie oben erwähnt, bei Bedarf die Ausstoßleistung einer derartigen Umformungseinheit verändert werden.

Bei einem vorteilhaften Verfahren wird wenigstens die Bewegung der Reckstange oder die Beaufschlagung der Kunststoffvorformlinge mit dem fließfähigen Medium zeitabhängig und/oder temperaturabhängig und insbesondere zeitabhängig gesteuert. Vorteilhaft folgt eine individuelle Steuerung der einzelnen Reckstangen bzw. deren Bewegung.

Bei einem weiteren vorteilhaften Verfahren werden die Transportgeschwindigkeiten der Kunststoffvorformlinge durch die Vorrichtung und durch eine Heizvorrichtung zum Erwärmen der Kunststoffvorformlinge einander angepasst. Dies bedeutet, dass die Vorrichtung zum Umformen der Kunststoffvorformlinge synchronisiert bzw. geblockt mit einer dieser insbesondere vorangestellten Heizeinrichtung zum Erwärmen der Kunststoffvorformlinge betrieben wird.

Weitere Vorteile und Ausführungsformen ergeben sich aus den beigefügten Zeichnungen.

Darin zeigen:
- Fig. 1: eine grob schematische Darstellung einer Anordnung zum Behandeln von Kunststoffbehältnissen und insbesondere einer Anlage zum Herstellen von Kunststoffbehältnissen; und
- Fig. 2: eine Darstellung einer erfindungsgemäßen Vorrichtung zum Umformen von Kunststoffvorformlingen zu Kunststoffbehältnissen.

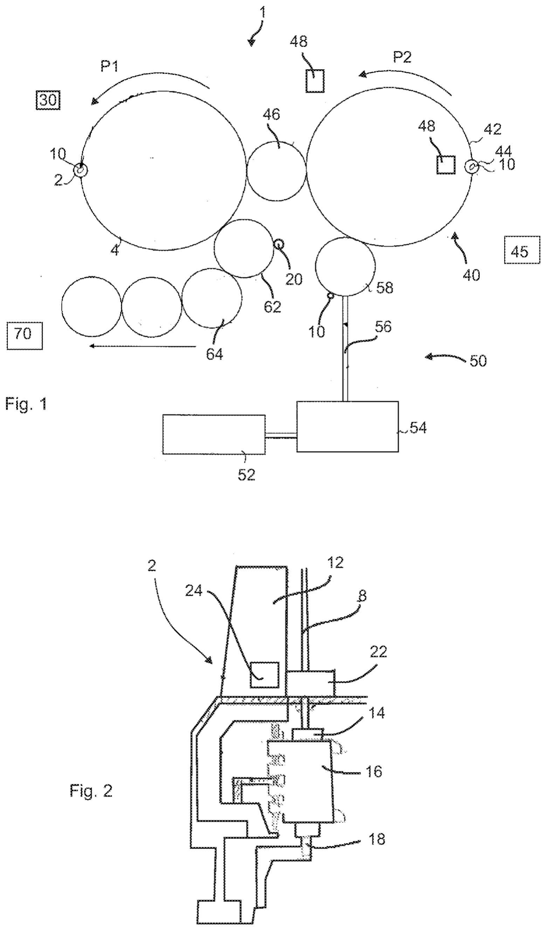

Fig. 1 zeigt eine schematische Darstellung einer erfindungsgemäßen Vorrichtung 1 zum Herstellen von Kunststoffbehältnissen. Dabei werden die Kunststoffvorformlinge über einen Vorrat wie eine Schütte 52 zunächst einer Sortiereinheit 54 zugeführt und von dort über eine Zuführschiene 56 und einen Transportstern 58 der in ihrer Gesamtheit mit 40 bezeichneten Heizvorrichtung zugeführt. Bei der Transporteinrichtung 58 kann es sich beispielsweise um einen Sägezahnstern handeln, der die Kunststoffvorformlinge bereits vereinzelt transportiert. Die Heizvorrichtung weist auch eine Vielzahl von Heizeinrichtungen 44 bzw. Heizkammern auf, die die Kunststoffvorformlinge 10 jeweils transportieren. Diese einzelnen Heizeinrichtungen bzw. Heizkammern 44 sind dabei an einem Trägerrad 42 angeordnet so dass die Kunststoffvorformlinge 10 hier auch entlang eines im Wesentlichen kreisförmigen zweiten Transportpfades P2 geführt werden.

Eine Steuereinrichtung 30 kann dabei beispielsweise in Abhängigkeit von einer Drehgeschwindigkeit des Trägerrads 42 bestimmen, wann bzw. bei welchem Umfangswinkel mit dem Heizvorgang für einen bestimmten Kunststoffvorformling begonnen wird. So wäre es möglich. dass bei einer höheren Transportgeschwindigkeit zu einem früheren Zeitpunkt entlang des Transportpfades P2 mit dem Heizvorgang begonnen wird und im Falle einer geringeren Geschwindigkeit zu einem späteren Zeitpunkt, so dass die Zeit, die zum Heizen der Kunststoffvorformlinge 10 aufgewendet wird, unabhängig von der Drehgeschwindigkeit des Trägerrads im wesentlichen konstant ist und die Kunststoffvorformlinge mit im wesentlichen der gleichen Endtemperatur verlassen. Auch wäre eine Anpassung der Heizleistung denkbar. Das Bezugszeichen 45 kennzeichnet eine Steuereinrichtung zum Steuern der Heizvorrichtung 40.

Dabei wäre es zusätzlich möglich, dass Sensoreinrichtungen 48 vorgesehen sind, welche vorzugsweise berührungslos eine Temperatur der Kunststoffvorformlinge erfassen. So wäre es auch möglich, dass bei Erreichen einer bestimmten Temperatur der Kunststoffvorformlinge der weitere Heizvorgang angehalten wird. Die Sensoreinrichtungen 48 können stationär angeordnet sein und/oder auch beweglich, insbesondere an dem Trägerrad 42 angeordnet sein

Über eine weitere Transporteinrichtung wie einen Transferstern 46 werden die nunmehr erwärmten Kunststoffvorformlinge an einer erfindungsgemäße Vorrichtung 1 zum Umformen von Kunststoffvorformlingen zu Kunststoffbehältnissen übergeben. Diese Vorrichtung 1 weist dabei ein Trägerrad 4 auf, an dem eine Vielzahl von Blasstationen 2 (nur eine gezeigt) angeordnet ist. Dabei werden, wie oben erwähnt, die einzelnen Parameter für den Umformungsvorgang beispielsweise der Blasdruck, eine Bewegung der Reckstange und dergleichen, nicht wie im Stand der Technik üblich, ortsabhängig gesteuert, sondern ebenfalls zeitabhängig.

Auf diese Weise kann ebenfalls erreicht werden, dass unabhängig von einer Drehgeschwindigkeit des Trägers bzw. Blasrades 4 der eigentliche Umformungsvorgang insbesondere in seinen zeitlichen Abläufen unverändert bleibt. So kann beispielsweise sichergestellt werden, dass eine Reckstangenbewegung von ihrem oberen Anschlag bis zu ihrem unteren Anschlag immer die gleiche vorgegebene Zeit benötigt, insbesondere unabhängig von einer Geschwindigkeit des Blasrads 4. Dies bedeutet, dass bei einer höheren Drehgeschwindigkeit des Blasrades 4 der Abschnitt des Transportpfades P1, entlang dessen die Kunststoffvorformlinge während des Umformungsvorganges geführt werden und während dessen der Umformungsvorgang stattfindet, länger ist bzw. einen größeren Umfangswinkel umstreicht, als bei einer langsameren Bewegung des Blasrads 4. Die fertig gestellten Kunststoffbehältnisse 20 werden über eine Vielzahl von Transportsternen 62, 64 zu einer Fülleinrichtung 70 transportiert.

Das Bezugszeichen 30 bezieht sich auf eine Steuerungseinrichtung, welche, wie oben erwähnt, eine Bewegung der Reckstangen und die Beaufschlagung der Kunststoffvorformlinge mit Luft steuert.

Fig. 2 zeigt eine schematische Darstellung einer Blasstation 2. Diese Blasstation 2 weist dabei einen Formträger 16 auf, der eine (nicht gezeigte) Blasform zum Umformen von Kunststoffvorformlingen zur Kunststoffbehältnissen aufweist. Über eine Beaufschlagungseinrichtung 14, welche beispielsweise eine Blasdüse aufweisen kann, kann dem Kunststoffvorformling zu dessen Expansion Druckluft zugeführt werden. Dabei ist weiterhin ein (nicht gezeigter) Ventilblock vorgesehen, mit dem die Druckluftzuführung an den Kunststoffvorformling (insbesondere auch unter Verwendung mehrerer Druckniveaus) gesteuert werden kann. Das Bezugszeichen 8 kennzeichnet eine Reckstange, die während des Umformungsvorgangs zum Recken des Kunststoffvorformlings dient. Diese Reckstange ist über einen Schlitten 22 an einem Träger 12 beweglich angeordnet. Das Bezugszeichen 18 kennzeichnet ein Bodenteil, welches die Blasform von unten abschließt. Dabei wäre es auch möglich, dass die Öffnungs- und Schließvorgänge ebenfalls zeitgesteuert (und nicht ortsgesteuert) sind. Das Bezugszeichen 24 kennzeichnet grob schematisch eine Antriebseinrichtung zum Bewegen der Reckstange. Bei dieser Antriebseinrichtung 24 kann es sich beispielsweise um einen elektromotorischen Antrieb handeln.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Blasstation
- 4: Trägerrad, Blasrad
- 8: Reckstange
- 10: Kunststoffvorformlinge
- 12: Träger
- 14: Beaufschlagungseinrichtung
- 16: Formträger
- 18: Bodenteil
- 20: Kunststoffbehältnis
- 22: Schlitten
- 24: Antriebseinrichtung
- 30: Steuerungseinrichtung
- 40: Heizvorrichtung
- 42: Trägerrad
- 44: Heizeinrichtung
- 45: Steuereinrichtung
- 46: Transferstern
- 48: Sensoreinrichtung
- 52: Vorrat, Schütte
- 54: Sortiereinheit
- 56: Zuführschiene
- 58: Transportstern
- 62, 64: Transportsterne
- 70: Fülleinrichtung

- P1: erster Transportpfad
- P2: zweiter Transportpfad
- L: Längsrichtung

## Patentansprüche

1. Anlage mit einer Vorrichtung (1) zum Umformen von Kunststoffvorformlingen (10) zu Kunststoffbehältnissen (20) mit einer Vielzahl von Blasstationen (2), wobei diese Blasstationen (2) jeweils Blasformen aufweisen, innerhalb denen die Kunststoffvorformlinge (10) zu den Kunststoffbehältnissen (20) umformbar sind, Beaufschlagungseinrichtungen (14), um die Kunststoffvorformlinge (10) mit einem fließfähigen Medium zu deren Umformung zu beaufschlagen und Reckstangen (8), um die Kunststoffvorformlinge (10) entlang deren Längsrichtung (L) zu dehnen, mit einer Transporteinrichtung (4) welche die Blasstationen (2) mit den Kunststoffvorformlingen (10) entlang eines ersten vorgegebenen Transportpfades (P1) transportiert und mit einer Steuerungseinrichtung (30), welche die Bewegung der Reckstangen (8) und die Beaufschlagung der Kunststoffvorformlinge (10) mit dem fließfähigen Medium derart steuert, dass vorgegebene Teilschritte des Umformungsvorgangs während des Transports der Kunststoffvorformlinge entlang des ersten Transportpfades (P1) durchgeführt werden,
**dadurch gekennzeichnet, dass**
Teilschritte des Umformungsvorgangs unabhängig von dem geometrischen Ort der Kunststoffvorformlinge (10) entlang des ersten Transportpfades (P1) durchführbar sind und so eine Ausstoßleistung der Vorrichtung (1) veränderbar ist, und wobei somit zwar eine Zuordnung zwischen dem Ort des Kunststoffvorformlings und dem jeweiligen Verfahrensschritt existiert, diese Zuordnung jedoch wählbar ist, und wobei die Ausstoßleistung eine Anzahl von produzierten Behältnissen pro Zeiteinheit bezeichnet, wobei die Anlage weitere, der Vorrichtung nachgeschaltete, Aggregate wie beispielsweise Etikettiermaschinen und Füllmaschinen aufweist und in Situationen der Anlage, in denen eine niedrigere Leistung wünschenswert ist, die Leistung der Vorrichtung, insbesondere bei geblockten Aufstellungen auch während der Produktion angepasst werden kann.

2. Anlage nach Anspruch 1,
**dadurch gekennzeichnet, dass**
die Steuerungseinrichtung (30) eine Zeitsteuerung zum Steuern der Bewegung der Reckstangen (8) aufweist.

3. Anlage nach Anspruch 1,
**dadurch gekennzeichnet, dass**
die Steuerungseinrichtung (30) eine Zeitsteuerung zum Steuern der Beaufschlagungseinrichtungen (14) aufweist.

4. Anlage nach wenigstens einem der vorangegangenen Ansprüche,
**dadurch gekennzeichnet, dass**
jede Blasstation (2) eine Antriebseinrichtung (24) zum Bewegen der Reckstange (8) aufweist und diese Antriebseinrichtungen unabhängig voneinander steuerbar sind.

5. Anlage nach wenigstens einem der vorangegangenen Ansprüche,
**dadurch gekennzeichnet, dass**
die Vorrichtung (1) einen drehbaren Träger aufweist, an dem eine Vielzahl von Blasstationen (2) angeordnet ist.

6. Anlage nach wenigstens einem der vorangegangenen Ansprüche mit einer Heizvorrichtung (40) zum Erwärmen der Kunststoffvorformlinge (10) und mit einer Transporteinrichtung, welche die Kunststoffvorformlinge (10) während deren Erwärmung entlang eines zweiten vorgegebenen Transportpfades (P2) transportiert, wobei diese Heizvorrichtung (40) in der Transportrichtung der Kunststoffvorformlinge (10) vor den Blasstationen (2) angeordnet ist.

7. Anlage nach Anspruch 6,
**dadurch gekennzeichnet, dass**
die Erwärmung der Kunststoffvorformlinge (10) unabhängig von dem geometrischen Ort der Kunststoffvorformlinge (10) entlang des zweiten Transportpfades (P2) durchführbar ist.

8. Anlage nach Anspruch 6,
**dadurch gekennzeichnet, dass**
die Vorrichtung (1) eine Zeitsteuerung und/oder Temperatursteuerung zum Erwärmen der Kunststoffvorformlinge (10) entlang des Transportpfades aufweist.

9. Anlage nach wenigstens einem der vorangegangenen Ansprüche,
**dadurch gekennzeichnet, dass**
dass die Heizvorrichtung (40) eine Vielzahl von Heizeinrichtungen (44) zum individuellen Erwärmen der Kunststoffvorformlinge (10) aufweist.

10. Anlage nach wenigstens einem der vorangegangenen Ansprüche,
**dadurch gekennzeichnet, dass**
die Heizvorrichtung (40) aus einer Gruppe von Heizvorrichtungen (40) ausgewählt ist, welche mikrowellenbasierte Heizvorrichtungen, laserbasierte Heizvorrichtungen, Infrarot-Heizvorrichtungen, STIR - Heizvorrichtungen, Kombinationen hieraus und dergleichen enthält.

11. Verfahren zum Umformen von Kunststoffvorformlingen (10) zu Kunststoffbehältnissen (20) in einer Anlage mit einer Vorrichtung (1) zum Umformen von Kunststoffvorformlingen (10) zu Kunststoffbehältnissen (20) wobei die Kunststoffvorformlinge (10) in einer Vielzahl von Blasstationen (2) zu den Kunststoffbehältnissen (20) umgeformt werden, und wobei die Kunststoffvorformlinge (10) während dieses Umformungsprozesses mittels Beaufschlagungseinrichtungen (14) mit einem fließfähigen Medium zu deren Umformung beaufschlagt werden und mittels Reckstangen (8) entlang deren Längsrichtung (L) gedehnt werden und wobei die Blasstationen (2) mit den Kunststoffvorformlingen (10) entlang eines vorgegebenen ersten Transportpfades (P1) transportiert werden und die Bewegung der Reckstangen (8) und die Beaufschlagung der Kunststoffvorformlinge (10) mit dem fließfähigen Medium derart gesteuert wird, dass vorgegebene Teilschritte des Umformungsvorgang während des Transports der Kunststoffvorformlinge (10) entlang des ersten Transportpfades (P1) durchgeführt werden,
**dadurch gekennzeichnet, dass**
die Teilschritte des Umformungsvorgangs wenigstens teilweise unabhängig von dem geometrischen Ort der Kunststoffvorformlinge (10) entlang des Transportpfades (P1) durchgeführt werden, und wobei somit zwar eine Zuordnung zwischen dem Ort des Kunststoffvorformlings und dem jeweiligen Verfahrensschritt existiert, diese Zuordnung jedoch wählbar ist, und wobei die Ausstoßleistung eine Anzahl von produzierten Behältnissen pro Zeiteinheit bezeichnet, wobei die Anlage weitere, der Vorrichtung nachgeschaltete, Aggregate wie beispielsweise Etikettiermaschinen und Füllmaschinen aufweist, wobei bei einer Anwendung des Verfahrens bei Situationen der Anlage, in denen eine niedrigere Leistung wünschenswert ist, insbesondere bei geblockten Aufstellungen die Leistung der Vorrichtung während der Produktion angepasst werden kann.

12. Verfahren nach Anspruch 11,
**dadurch gekennzeichnet, dass**
wenigstens die Bewegung der Reckstange (8) oder die Beaufschlagung der Kunststoffvorformlinge (10) mit dem fließfähigen Medium zeitabhängig gesteuert wird.

13. Verfahren nach Anspruch 11,
**dadurch gekennzeichnet, dass**
die Transportgeschwindigkeiten der Kunststoffvorformlinge (10) durch die Vorrichtung (1) und durch die Heizvorrichtung (40) aufeinander angepasst werden.

## Claims

1. A system with an apparatus (1) for forming plastics material preforms (10) into plastics material containers (20), with a plurality of blowing stations (2), wherein these blowing stations (2) each comprising blow moulds, inside which the plastics material preforms (10) can be formed into the plastics material containers (20), application devices (14) in order to apply the plastics material preforms (10), for the forming thereof, with a flowable medium, and stretching rods (8) in order to extend the plastics material preforms (10) in the longitudinal direction (L) thereof, with a transport device (4) which transports the blowing stations (2) with the plastics material preforms (10) along a first predefined transport path (P1), and with a control device (30) which controls the movement of the stretching rods (8) and the applying of the plastics material preforms (10) with the flowable medium in such a way that predefined sub-steps of the forming process are carried out during the transport of the plastics material preforms along the first transport path (P1),
**characterised in that**
sub-steps of the forming process can be carried out independently of the geometric position of the plastics material preforms (10) along the first transport path (P1) and an output rate of the apparatus (1) can thus be changed, and wherein therefore there is a correlation between the position of the plastics material preform and the respective method step, this correlation, however, can be selected, and wherein the output rate denotes a number of containers produced per unit of time, wherein the system has further aggregates downstream of the apparatus, such as for example labelling machines and filling machines and in situations of the system in which a lower performance is desirable, the performance of the apparatus, in particular by blocked installations can be adapted also during production.

2. The system according to claim 1,
**characterised in that**
the control device (30) comprises a timer for controlling the movement of the stretching rods (8).

3. The system according to claim 1,
**characterised in that**
the control device (30) comprises a timer for controlling the application devices (14).

4. The system according to at least one of the preceding claims,
**characterised in that**
each blowing station (2) comprises a drive device (24) for moving the stretching rod (8) and these drive means can be controlled independently of one another.

5. The system according to at least one of the preceding claims,
**characterised in that**
the apparatus (1) comprises a rotatable carrier on which a plurality of blowing stations (2) are arranged.

6. The system (1) according to at least one of the preceding claims, with a heating apparatus (40) for heating the plastics material preforms (10) and with a transport device which transports the plastics material preforms (10) during the heating thereof along a second predefined transport path (P2), wherein this heating apparatus (40) is arranged before the blowing stations (2) in the direction of transport of the plastics material preforms (10).

7. The system according to claim 6,
**characterised in that**
the plastics material preforms (10) can be heated independently of the geometric position of the plastics material preforms (10) along the second transport path (P2).

8. The system according to claim 6,
**characterised in that**
the apparatus (1) comprises a timer and/or temperature control for heating the plastics material preforms (10) along the transport path.

9. The system according to at least one of the preceding claims,
**characterised in that**
the heating apparatus (40) comprises a plurality of heating devices (44) for individually heating the plastics material preforms (10).

10. The system according to at least one of the preceding claims,
**characterised in that**
the heating apparatus (40) is selected from a group of heating apparatuses (40) which includes microwave-based heating apparatuses, laser-based heating apparatuses, infrared heating apparatuses, STIR heating apparatuses, combinations thereof and the like.

11. A method for forming plastics material preforms (10) into plastics material containers (20) in a system with an apparatus (1) for forming plastics material preforms (10) to plastics material containers (20), wherein the plastics material preforms (10) being formed into the plastics material containers (20) in a plurality of blowing stations (2), and wherein the plastics material preforms (10), for the forming thereof, being applied during this forming process with a flowable medium by application devices (14) and being extended in the longitudinal direction (L) thereof by means of stretching rods (8), and the blowing stations (2) being transported with the plastics material preforms (10) along a predefined first transport path (P1) and the movement of the stretching rods (8) and the applying of the plastics material preforms (10) with the flowable medium being controlled in such a way that predefined sub-steps of the forming process are carried out during the transport of the plastics material preforms (10) along the first transport path (P1),
**characterised in that**
the sub-steps of the forming process are carried out, at least in part, independently of the geometric position of the plastics material preforms (10) along the transport path (P1), and wherein therefore there is a correlation between the position of the plastics material preform and the respective method step, this correlation, however, can be selected, and wherein the output rate denotes a number of containers produced per unit of time, wherein the system has further aggregates downstream of the apparatus, such as for example labelling machines and filling machines and in situations of the system in which a lower performance is desirable, the performance of the apparatus, in particular by blocked installations can be adapted also during production.

12. The method according to claim 11,
**characterised in that**
at least the movement of the stretching rod (8) or the application of the plastics material preforms (10) with the flowable medium is controlled in a time-dependent manner.

13. The method according to claim 11,
**characterised in that**
the transport speeds of the plastics material preforms (10) through the apparatus (1) and through the heating apparatus (40) are adapted to one another.

## Revendications

1. Installation avec un dispositif (1) de formage de préformes en plastique (10) en contenants en plastique (20) avec une pluralité de postes de soufflage (2), dans lequel ces postes de soufflage (2) présentent chacun des moules de soufflage, à l'intérieur desquels les préformes en plastique (10) peuvent être formées en contenants en plastique (20), des dispositifs d'actionnement (14) pour appliquer un milieu fluide sur les préformes en plastiques (10) pour leur formage et des tiges d'étirage (8) pour étirer les préformes en plastique (10) le long de leur direction longitudinale (L), avec un dispositif de transport (4) qui transporte les postes de soufflage (2) avec les préformes en plastique (10) le long d'un premier chemin de transport (P1) prédéterminé et avec un dispositif de commande (30) qui commande le mouvement des tiges d'étirage (8) et l'application du milieu fluide sur les préformes en plastique (10) de telle manière que des sous-étapes prédéterminées du processus de formage soient effectuées pendant le transport des préformes en plastique le long du premier chemin de transport (P1),
**caractérisé en ce que**
les sous-étapes du processus de formage peuvent être effectuées indépendamment de l'emplacement géométrique des préformes en plastique (10) le long du premier chemin de transport (P1) et ainsi une capacité de sortie du dispositif (1) peut être modifiée, et bien qu'il existe une association entre l'emplacement de la préforme en plastique et l'étape de traitement respective, cette association peut cependant être sélectionnée, et dans lequel la capacité de sortie désigne un nombre de contenants produits par unité de temps, dans lequel l'installation présente des agrégats supplémentaires disposés en aval du dispositif comme par exemple des machines d'étiquetage et des machines de remplissage et dans des situations de l'installation durant lesquelles une performance inférieure est souhaitée, la performance du dispositif peut être ajustée, en particulier quand des systèmes sont bloqués aussi pendant la production.

2. Installation selon la revendication 1,
**caractérisé en ce que**
le dispositif de commande (30) a une commande de temps pour commander le mouvement des tiges d'étirage (8).

3. Installation selon la revendication 1,
**caractérisé en ce que**
le dispositif de commande (30) a une commande de temps pour commander les dispositifs d'application (14).

4. Installation selon au moins l'une des revendications précédentes,
**caractérisé en ce que**
chaque poste de soufflage (2) présente un dispositif d'entraînement (24) pour déplacer la tige d'étirage (8) et les dispositifs d'entraînement peuvent être commandés indépendamment les uns des autres.

5. Installation selon au moins l'une des revendications précédentes,
**caractérisé en ce que**
le dispositif (1) présente un support rotatif sur lequel une pluralité de postes de soufflage (2) sont agencés.

6. Installation selon au moins l'une des revendications précédentes, avec un dispositif de chauffage (40) pour chauffer les préformes en plastique (10) et avec un dispositif de transport qui transporte les préformes en plastique (10) le long d'un deuxième trajet de transport (P2) prédéterminé pendant leur chauffage, le dispositif de chauffage (40) étant disposé avant les postes de soufflage (2) dans le sens de transport des préformes en plastique (10).

7. Installation selon la revendication 6,
**caractérisé en ce que**
le chauffage des préformes en plastique (10) peut être réalisé indépendamment de l'emplacement géométrique des préformes en plastique (10) le long du deuxième chemin de transport (P2).

8. Installation selon la revendication 6,
**caractérisé en ce que**
le dispositif (1) présente une commande de temps et/ou une commande de température pour chauffer les préformes en plastique (10) le long du trajet de transport.

9. Installation selon au moins l'une des revendications précédentes,
**caractérisé en ce que**
le dispositif de chauffage (40) présente une pluralité de dispositifs de chauffage (44) pour chauffer individuellement les préformes en plastique (10).

10. Installation selon au moins l'une des revendications précédentes,
**caractérisé en ce que**
le dispositif de chauffage (40) est choisi parmi un groupe de dispositifs de chauffage (40) qui comprend des dispositifs de chauffage à micro-ondes, des dispositifs de chauffage à laser, des dispositifs de chauffage infrarouge, des dispositifs de chauffage STIR, des combinaisons de ceux-ci et analogues.

11. Procédé de formage de préformes en plastique (10) en contenants en plastique (20) dans une installation avec un dispositif (1) de formage de préformes en plastique (10) en contenants en plastique (20) dans lequel les préformes en plastique (10) sont formées en contenants en plastique (20) dans une pluralité de postes de soufflage (2), et dans lequel les préformes en plastique (10) sont sollicitées au moyen de dispositifs d'application (14) avec un milieu fluide pour leur formage pendant ce processus de formage et étirées au moyen de tiges d'étirage (8) le long de leur direction longitudinale (L) et dans lequel les postes de soufflage (2) sont transportés avec les préformes en plastique (10) le long d'un premier trajet de transport (P1) prédéterminé et le mouvement des tiges d'étirage (8) et l'application du milieu fluide sur les préformes en plastique (10) sont contrôlés de telle manière que des sous-étapes prédéterminées du processus de formage soient effectuées pendant le transport des préformes en plastique (10) le long du premier chemin de transport (P1),
**caractérisé en ce que**
les sous-étapes du processus de formage sont effectuées au moins partiellement indépendamment de l'emplacement géométrique des préformes plastiques (10) le long du chemin de transport (P1), et bien qu'il existe une association entre l'emplacement de la préforme plastique et l'étape de traitement respective, cette association peut cependant être sélectionnée, et dans lequel la capacité de sortie désigne un nombre de contenants produits par unité de temps, dans lequel l'installation présente des agrégats supplémentaires disposés en aval du dispositif comme par exemple des machines d'étiquetage et des machines de remplissage, dans lequel durant l'application du procédé dans des situations de l'installation durant lesquelles une performance inférieure est souhaitée, en particulier quand des systèmes sont bloqués, la performance du dispositif peut être ajustée pendant la production.

12. Procédé selon la revendication 11,
**caractérisé en ce que**
au moins le mouvement de la tige d'étirage (8) ou l'action des préformes en plastique (10) avec le milieu fluide est commandé en fonction du temps.

13. Procédé selon la revendication 11,
**caractérisé en ce que**
les vitesses de transport des préformes en plastique (10) à travers le dispositif (1) et à travers le dispositif de chauffage (40) peuvent être adaptées l'une à l'autre.
